# EUROPEAN PATENT APPLICATION

(11) **EP 2 451 154 A2**
(43) Date of publication of application: **09.05.2012**
(21) Application number: 11183257.2
(22) Date of filing: 29.09.2011
(51) Int. Cl.: H04N 7/01

(54) **Display device and display method**

(30) Priority: 09.11.2010 JP 2010250697
(71) Applicant: Sony Corporation, Tokyo 108-0075 (JP)
(72) Inventor: Sato, Yoshihisa, Minato-ku, Tokyo 108-0075 (JP); Okamoto, Yoshiki, Minato-ku, Tokyo 108-0075 (JP); Yoshida, Tetsuyuki, Minato-ku, Tokyo 108-0075 (JP); Chiba, Atsuhiro, Minato-ku, Tokyo 108-0075 (JP); Sakamoto, Sho, Minato-ku, Tokyo 108-0075 (JP)
(74) Representative: Ealey, Douglas Ralph

(57) **Abstract**

A display device includes: a display unit including plural display sections divided in a first direction and performing line sequential scanning in the first direction; and an interpolation picture generation unit generating an interpolation picture in accordance with a timing at which each display section is scanned based on supplied frame pictures, wherein the display unit displays the interpolation picture corresponding to the display section in each display section.

## Description

The present disclosure relates to a display device and a display method thereof.

In recent years, transition is proceeding in the field of display devices from a CRT (Cathode Ray Tube) display device which has been used from the past to thin-type display devices such as a liquid crystal display device, a plasma display device and an organic EL (Electro Luminescence) display device. As the thin-type display devices can realize a large screen with a small setting area as compared with the CRT display device, they are not only used for a television receiver but also widely used for electronic apparatuses such as a cellular phone because the thin-type devices are suitable for miniaturization.

There exists a frame rate conversion using frame interpolation as one of video signal processing for improving picture quality in the display device. In the frame rate conversion, interpolated frames interpolating adj acent frames of inputted video are generated and the interpolated frames are added to the inputted video (for example, refer to JP-A-2010-56694 (Patent document 1), JP-A-2007-74588 (Patent document 2), "Motion flow 120Hz double-speed LCD", "Motion flow 240Hz 4-times speed LCD" [online], Sony Corporation, (searched on 1st October, 2010), Internet (http://www.sony,jp/bravia/technology/mf240/index.html) (Non-patent document 1) and so on). According to the technology, displayed video will be smoother video, additionally, so-called motion blur caused by a pixel state maintaining for a one frame period is reduced in a case of, for example, a liquid crystal display device, which improves picture quality.

Incidentally, for example, the display device performing line sequential scanning performs display by scanning respective frame pictures included in a supplied video signal from the top to the foot of a display screen. That is, a frame picture corresponding to certain one timing (moment) is displayed at timings different from one another in respective positions on the display screen. Accordingly, for example, in a case of video in which a subject moves quickly in the vertical direction of the display screen, an observer may feel that the video is unnatural and picture quality is deteriorated. There is no description concerning image deterioration and countermeasures against the deterioration in Patent documents 1, 2 and Non-patent document 1.

In view of the above, it is desirable to provide a display device and a display method capable of improving picture quality.

Various respective aspects and features of the invention are defined in the appended claims. Combinations of features from the dependent claims may be combined with features of the independent claims as appropriate and not merely as explicitly set out in the claims.

Embodiments of the present invention are directed to a display device displaying picture information and a display method thereof.

An embodiment of the present disclosure is directed to a display device including a display unit and an interpolation picture generation unit. The display unit includes plural display sections divided in a first direction and performing line sequential scanning in the first direction. The interpolation picture generation unit generates an interpolation picture in accordance with a timing at which each display section is scanned based on supplied frame pictures. The display unit displays the interpolation picture corresponding to the display section in each display section.

Another embodiment of the present disclosure is directed to a display method including generating an interpolation picture based on supplied frame pictures in accordance with a timing at which each display section in plural display sections is scanned, which are divided in a scanning direction of a display screen to be displayed by line sequential scanning, and displaying the interpolation picture corresponding to the display section in each display section.

In the display device and the display method according to the embodiments of the present disclosure, the generated interpolation pictures are displayed by line sequential scanning. In this case, the interpolation picture is generated in accordance with the timing at which each display section divided in the scanning direction of the display unit is scanned.

The display device according to the embodiment of the present disclosure may be configured such that, for example, the display unit is configured by arranging display lines in the first direction in parallel each having a row of plural display elements provided in a direction intersecting with the first direction, and the display section are display lines.

The display device according to the embodiment of the present disclosure may be configured such that the display unit is configured by arranging display lines in the first direction in parallel each having a row of plural display elements provided in the direction intersecting with the first direction, and the display section includes plural display lines. In this case, the interpolation picture generation unit can generate each interpolation picture in accordance with a timing at which a display element positioned at the center of each display section in the first direction is scanned.

As the interpolation picture is generated in accordance with a timing at which each display section is scanned in the display device and the display method according to the embodiments of the present disclosure, the difference of timing between the display picture and actual display can be reduced and picture quality can be improved.

Embodiments of the invention will now be described with reference to the accompanying drawings, throughout which like parts are referred to by like references, and in which:
Fig. 1 is a block diagram showing a configuration example of a display device according to a first embodiment of the present disclosure;
Figs. 2A and 2B are explanatory diagrams showing an operation example of an interpolation line picture generation unit shown in Fig. 1;
Fig. 3 is a circuit diagram showing a configuration example of a pixel shown in Fig. 1;
Figs. 4A to 4C are schematic diagrams showing an operation example of the display device shown in Fig. 1;
Figs. 5A and 5B are schematic diagrams showing an operation example of a display device according to a modification example of a first embodiment;
Figs. 6A and 6B are explanatory diagrams showing an operation example of an interpolation line picture generation unit according to the modification example of the first embodiment;
Fig. 7 is a block diagram showing a configuration example of a display device according to a second embodiment of the present disclosure;
Fig. 8 is an explanatory diagram for explaining sections in a display unit shown in Fig. 7;
Figs. 9A and 9B are explanatory diagrams showing an operation example of an interpolation picture generation unit shown in Fig. 7;
Figs. 10A to 10C are schematic diagrams showing an operation example of the display device shown in Fig. 7; and
Figs. 11A to 11C are schematic diagrams showing an operation example of a display device according to a modification example of the second embodiment.

Hereinafter, embodiments of the present disclosure will be explained in detail with reference to the drawings. The explanation will be made in the following order.
1. First Embodiment
2. Second Embodiment

### <1. First Embodiment>

### [Configuration example]

### (Entire configuration example)

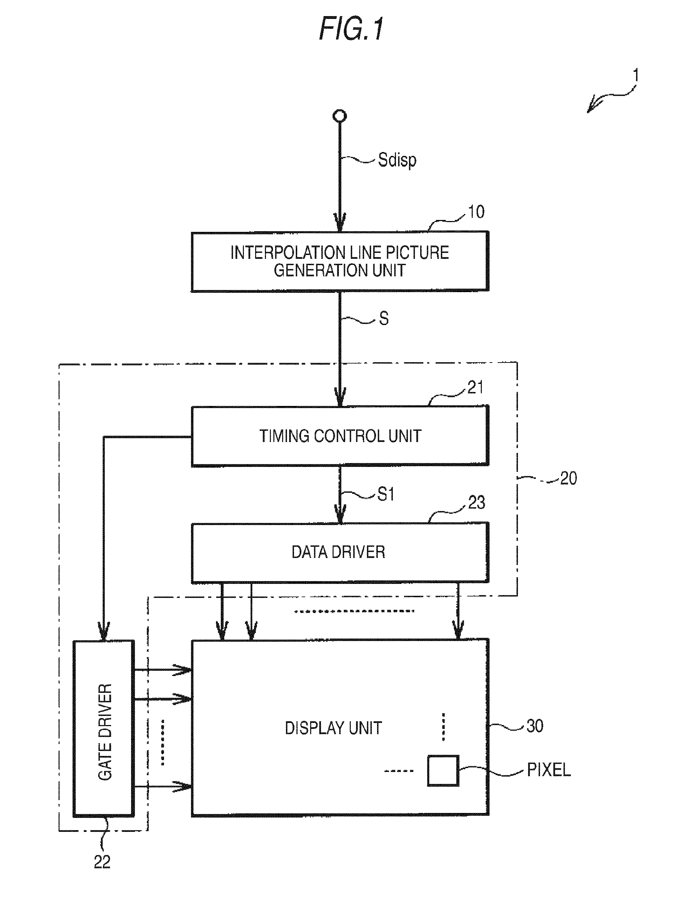

Fig. 1 shows a configuration example of a display device according to a first embodiment of the present disclosure. As a display method according to the embodiment of the present disclosure will be explained with display device as it is realized by the embodiment. A display device 1 includes an interpolation line picture generation unit 10, a display driving unit 20 and a display unit 30.

The interpolation line picture generation unit 10 generates an interpolation line picture Li (described later) based on a supplied video signal Sdisp and outputs the picture as a video signal S. Specifically, the interpolation line picture generation unit 10 generates an interpolation picture (interpolation line picture Li) in accordance with a timing at which a horizontal line is scanned in each horizontal line of the display unit 30 based on frame pictures E included in the video signal Sdisp as described later. The interpolation line picture generation unit 10 supplies the interpolation line picture Li to the display driving unit 20 as the video signal S.

The display driving unit 20 drives the display unit 30 based on the video signal S supplied from the interpolation line picture generation unit 10 as shown in Fig. 1. The display unit 30 performs display by line sequential scanning, which is formed by a liquid crystal display device in this example.

### (The interpolation line picture generation unit 10)

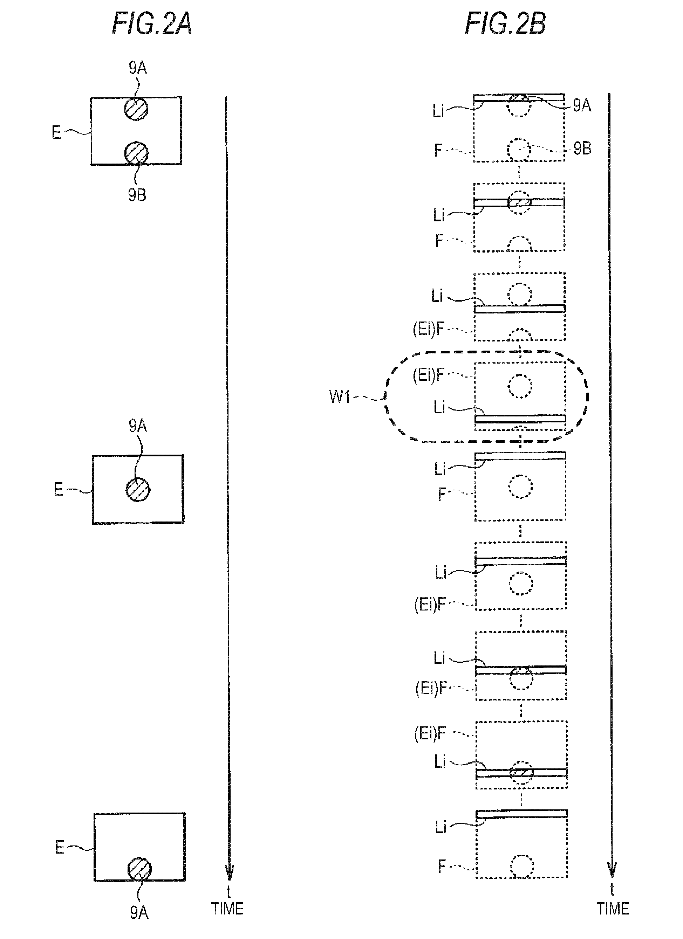

Figs. 2A and 2B schematically shows an operation example of the interpolation line picture generation unit 10. Fig. 2A shows the supplied video signal Sdisp and Fig. 2B shows the video signal S generated by the interpolation line picture generation unit 10.

The video signal Sdisp includes a series of frame pictures E as shown in Fig. 2A. First, the interpolation line picture generation unit 10 generates an interpolation frame picture Ei based on picture information of frame pictures E which are temporally adjacent to each other, and generates a series of frame pictures F by inserting the frame picture Ei between these frame pictures E (Fig. 2B). The generation of the interpolation frame picture Ei is performed in accordance with respective timings at the time of performing line sequential scanning by each one horizontal line in the display unit 30 as described later. For example, in a case of video in which balls 9A, 9B move from the top to the foot of the frame as shown in Fig. 2A, the balls 9A, 9B move from the top to the foot smoothly as shown in Fig. 2B by the interpolation processing. Then, the interpolation line picture generation unit 10 generates the interpolation line picture Li by extracting pictures for one horizontal line concerning the frame picture from each frame picture F (Fig. 2B). In Fig. 2B, the interpolation line picture Li is shown as a region with a width, not a line without width (one horizontal line) for convenience of explanation. The interpolation line picture generation unit 10 outputs the interpolation line picture Li as the video signal S.

In the above explanation, the interpolation line picture generation unit 10 generates the interpolation frame picture Ei based on the frame picture E once and generates the interpolation line picture Li based on the interpolation frame picture Ei, however, it is not limited to this, and it is also preferable to generate the interpolation line picture Li directly based on the frame picture E.

### (The display driving unit 20 and the display unit 30)

The display driving 20 includes a timing control unit 21, a gate driver 22 and a data driver 23 as shown in Fig. 1. The timing control unit 21 controls drive timing of the gate driver 22 and the data driver 23 as well as supplies the video signal S supplied from the interpolation line picture generation unit 10 to the data driver 23 as a video signal S1. The gate driver 22 performs line sequential scanning by sequentially selecting pixels Pix in the display unit 30 with respect to each horizontal line in accordance with timing control by the timing control unit 21. The data driver 23 supplies a pixel signal based on the video signal S1 to respective pixels Pix of the display unit 30. Specifically, the data driver 23 performs D/A (digital/analog) conversion based on the video signal S1, thereby generating a pixel signal Vpix as an analog signal to be supplied to respective pixels Pix.

The display unit 30 is formed by filling liquid crystal material between two transparent substrates made of, for example, glass and the like. Transparent electrodes made of, for example, ITO (indium Tin Oxide) and so on are formed on portions facing liquid crystal display material of these transparent substrates, which forms pixels Pix with the liquid crystal material. In the display unit 30, the pixels Pix are arranged in a matrix state.

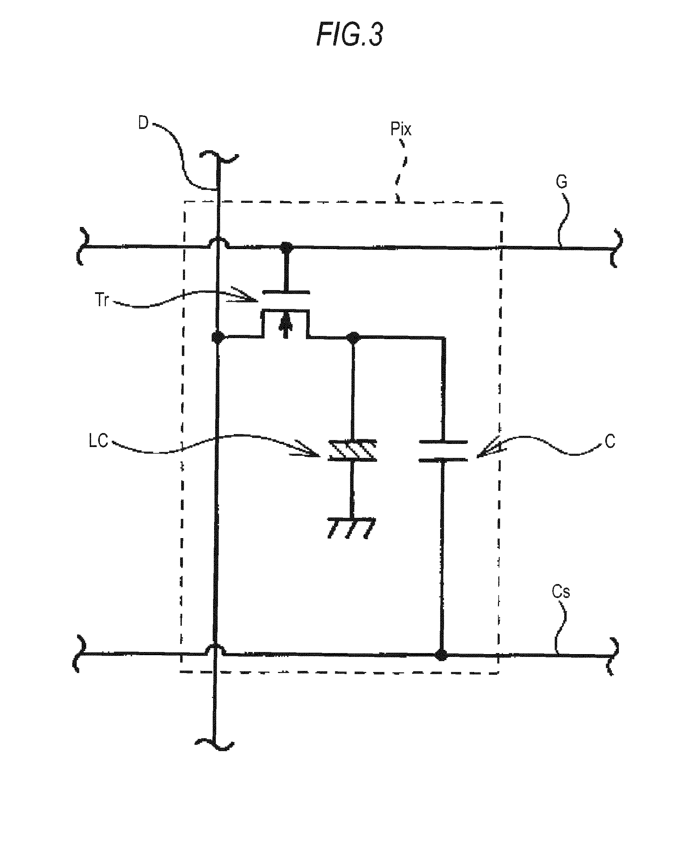

Fig. 3 shows an example of a circuit diagram of the pixel Pix. The pixel Pix includes a TFT (Thin Film Transistor) element Tr, a liquid crystal element LC and a storage capacitor element C. The TFT element Tr includes, for example, a MOS-TFT (Metal Oxide Semiconductor-Field Effect Transistor), in which a gate is connected to a gate line G, a source is connected to a data line D and a drain is connected to one end of the liquid crystal element LC and one end of the storage capacitor element C. One end of the liquid crystal element LC is connected to the drain of the TFT element Tr and the other end thereof is grounded. One end of the storage capacitor element C is connected to the drain of the TFT element Tr and the other end thereof is connected to a storage capacitor element line Cs. The gate line G is connected to the gate driver 22 and the data line D is connected to the data driver 23.

According to the configuration, when the gate driver 22 drives the gate lines G so as to scan line-sequentially the gate lines G in the display unit 30 in a time sharing manner, horizontal lines are sequentially selected and the pixel signal Vpix is supplied to the pixels Pix belonging to one horizontal line by the data driver 23, thereby performing display by each horizontal line.

Here, the interpolation line picture generation unit 10 corresponds to a specific example of an "interpolation picture generation unit" in the present disclosure. The interpolation line picture Li corresponds to a specific example of an "interpolation picture" in the present disclosure. The liquid crystal element LC corresponds to one specific example of a "display element" in the present disclosure.

### [Operation and action]

Subsequently, operation and action of the display device 1 according to the embodiment will be explained.

### (Entire operation summary)

First, the entire operation of the display device 1 will be explained with reference to Fig. 1. The interpolation line picture generation unit 10 generates and outputs the video signal S including the interpolation line picture Li based on the video signal Sdisp. The timing control unit 21 supplies control signals to the gate driver 22 and the data driver 23 respectively based on the video signal S to thereby control these drivers to operate in synchronization with each other as well as supplies the video signal S to the data driver 23 as the video signal S1. The gate driver 22 sequentially drives the gate lines G of the display unit 30 to thereby sequentially select horizontal lines to be displayed. The data driver 23 drives the data lines D of the display unit 30 to thereby supply the pixel signals Vpix to the pixel Pix in one horizontal line selected by the gate driver 22. The display unit 30 performs display by line sequential scanning.

### (Detailed operation)

Next, detailed operation of the display device 1 will be explained.

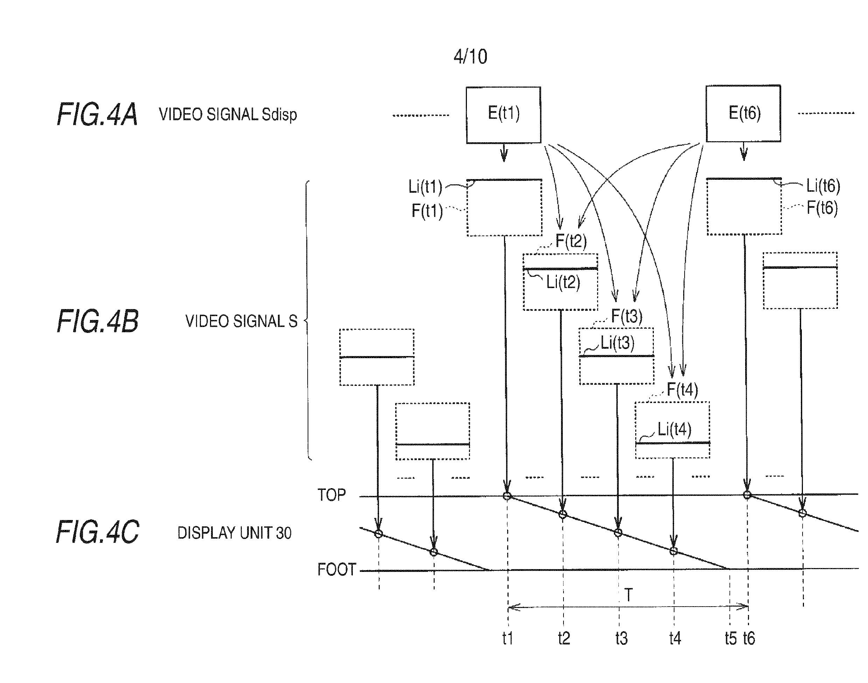

Figs. 4A to 4C show an operation example of the display device 1. Fig. 4A shows the video signal Sdisp, Fig. 4B shows the video signal S and Fig. 4C shows line sequential scanning in the display unit 30.

In Fig. 4A, for example, a frame picture E (t1) indicates the frame picture E concerning a timing "t1" and a frame picture E (t6) indicates the frame picture E concerning a timing "t6". In Fig. 4B, F (t1) indicates the frame picture F concerning the timing "t1", and Li (t1) indicates the interpolation line picture Li concerning the timing "t1"**.** A vertical axis of Fig. 4C indicates positions of the display unit 30 in a line sequential scanning direction. That is, Fig. 4C indicates positions of the horizontal lines to be line-sequentially scanned in a certain time (horizontal axis).

In the display device 1, the line sequential scanning is performed in a scanning cycle T. Here, the scanning cycle T can be, for example, 16.7[msec] (one cycle of 60Hz).

First, the interpolation line picture generation unit 10 generates an interpolation line picture Li (t1) based on the frame picture E (t1) as shown in Figs. 4A and 4B. Schematically, the interpolation line picture generation unit 10 sets the frame picture E (t1) included in the video signal Sdisp as the frame picture F (t1) and extracts data of one line at the top thereof, thereby generating the interpolation picture Li (t1). Then, the display unit 30 displays the interpolation line picture Li at the top of the display screen of the display 30 as shown in Fig. 4C.

After that, the interpolation line picture generation unit 10 sequentially generates the interpolation line pictures Li based on the frame pictures E (t1), E (t6) in synchronization with the line sequential scanning in the display unit 30, and the display unit 30 displays the interpolation line pictures Li at corresponding portions on the display screen.

Specifically, for example, the interpolation line picture generation unit 10 performs interpolation processing based on the frame pictures E (t1), E (t6) as shown in Figs. 4A and 4B to thereby generate a frame picture F (t2) concerning a timing "t2". Then, interpolation line picture generation unit 10 extracts a portion corresponding to a position in the horizontal line to be scanned at the timing "t2" from the frame picture F (t2) to thereby generate an interpolation picture Li (t2). That is, as the horizontal line will be a position lower from the top of the display screen by 1/4 of the screen at the timing "t2" as shown in Fig. 4C, the interpolation line picture generation unit 10 extracts line data at the position lower from the top of the picture by 1/4 in the frame picture F (t2) to thereby generate the interpolation line picture Li (t2). Then, the display unit 30 displays the interpolation line picture Li (t2) .

As described above, the above operation is performed in synchronization with the line sequential scanning of the display unit 30 at timings "t1" to "t5" in the display device 1. Then, when scanning is completed at the timing "t5", the line sequential scanning is performed again from the top after a period of the timing "t5" to a timing "t6" (vertical blanking period) passes.

### (Comparative example)

Next, a display device 1R according to a comparative example will be explained. In the comparative example, interpolation processing based on the frame pictures E is not performed. That is, the display device 1 is configured by using the interpolation line picture generation unit 10 in the embodiment (Fig. 1), however, in the comparative example, the display device 1R is configured by using a line picture generation unit 10R instead of the above unit, which supplies picture information of the frame pictures E to the display driving unit 20 line by line without performing interpolation processing. The other components are the same as the embodiment (Fig. 1).

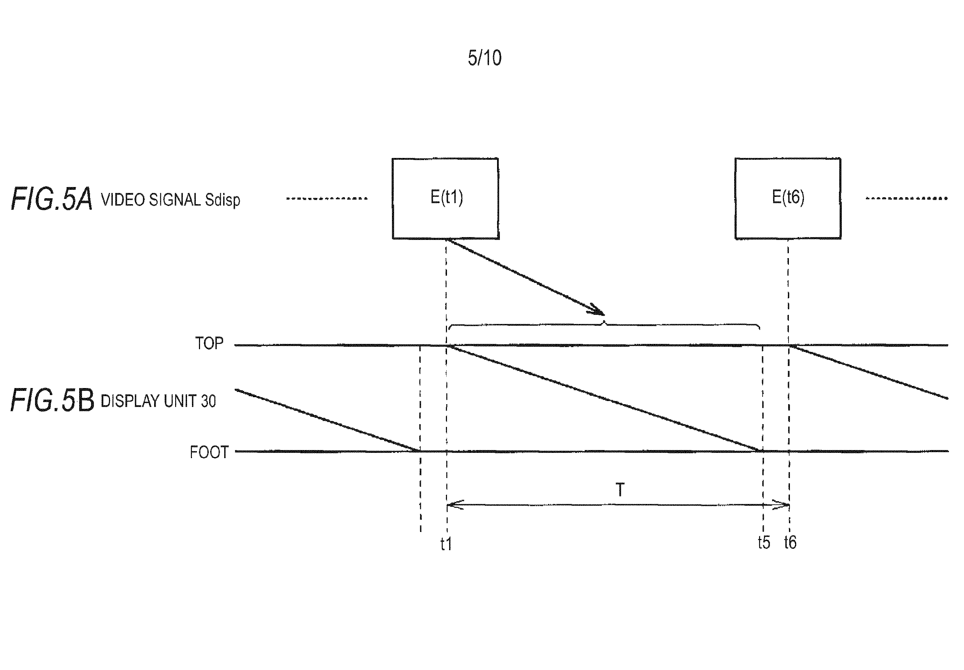

Figs. 5A and 5B shows an operation example of the display device 1R. Fig. 5A shows the video signal Sdisp and Fig. 5B shows line sequential scanning in the display unit 30.

In the display device 1R according to the comparative example, display is performed by the line sequential scanning based on a frame picture E (for example, the frame picture E (t1)) corresponding to certain one timing (moment). That is, for example, an upper picture and a lower picture of the frame picture E are originally pictures concerning the same timing, however, they are displayed on the display unit 30 at different timings respectively. Accordingly, for example, in the case of video in which the subject moves quickly in the vertical direction of the display screen, the observer may feel that the video is unnatural and that picture quality is deteriorated.

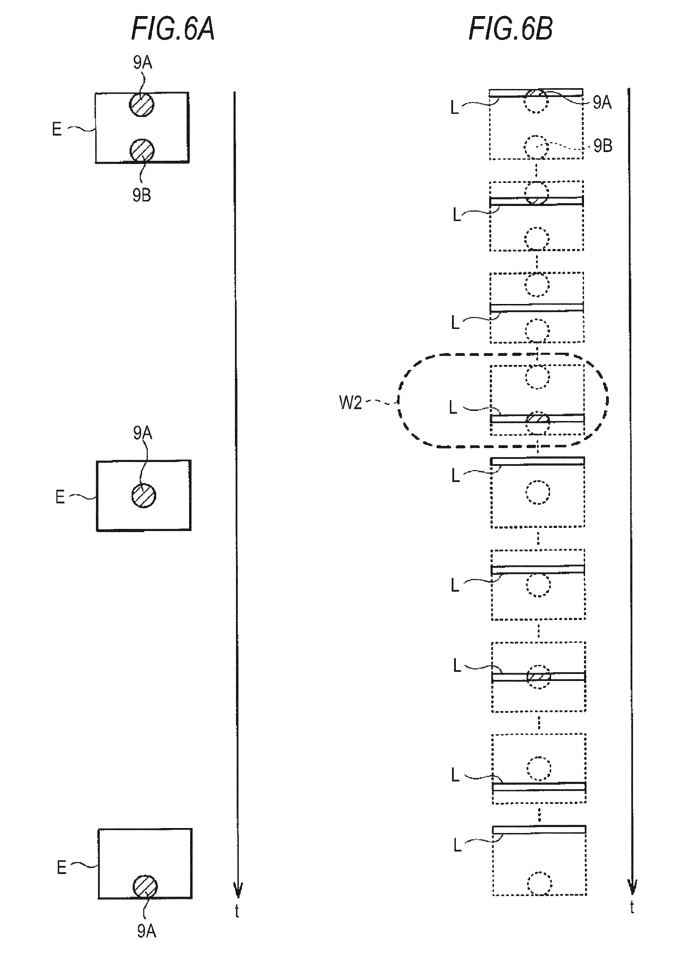

Figs. 6A and 6B schematically shows an operation example of the line picture generation unit 10R. Fig. 6A shows the supplied video signal Sdisp and Fig. 6B shows the video signal S generated by the line picture generation unit 10R.

As the display device 1R does not perform the interpolation processing, the display picture does not change in the scanning cycle T and changes every time a new scanning cycle begins. That is, for example, balls 9A, 9B do not move in the period of the scanning cycle T. In other words, it is natural that the balls 9A, 9B moves from the top to the bottom of the frame in the period of the display cycle T as shown in Fig. 2B, however, the balls 9A, 9B stand still in the display device 1R as shown in Fig. 6B. Accordingly, for example, the ball 9B is displayed at a lower part of the display screen at the timing as shown in W2 of Fig. 6B.

On the other hand, as the interpolation line picture generation unit 10 generates the interpolation line picture Li (Fig. 2B) by performing interpolation processing in accordance with the line sequential scanning in the display unit 30, the display picture changes line by line in accordance with the line sequential scanning. Therefore, for example, the ball 9B is not displayed at the lower part of the display screen at the timing as shown in W1 of Fig. 2B, and the user observes more natural video. As described above, the difference of timing between the display picture and the display unit 30 can be reduced in the display device 1, which can improve picture quality.

### [Advantages]

As described above, the interpolation line picture is generated in accordance with the scanning timing in each horizontal line and display is performed in accordance with the interpolation line picture when performing display on the display unit by line sequential scanning in the embodiment, therefore, the difference of timing between the display picture and the display unit 30 can be reduced and picture quality can be improved.

Additionally, as the interpolation line picture corresponding to the scanning timing is displayed in the embodiment, the normal display unit can be used and procurement costs for parts can be reduced, which differs from a case where, for example, frame rate conversion is performed by performing the interpolation processing in each frame picture and display is performed on a display unit capable of performing high speed driving such as double-speed driving.

### <2. Second Embodiment>

Next, a display device 2 according to a second embodiment of the present disclosure will be explained. In the embodiment, interpolation pictures are generated in respective display areas divided in a scanning direction of a display screen and display is performed based on the interpolation pictures. The same signs are given to components substantially the same as the display device 1 according to the first embodiment and explanation thereof is appropriately omitted.

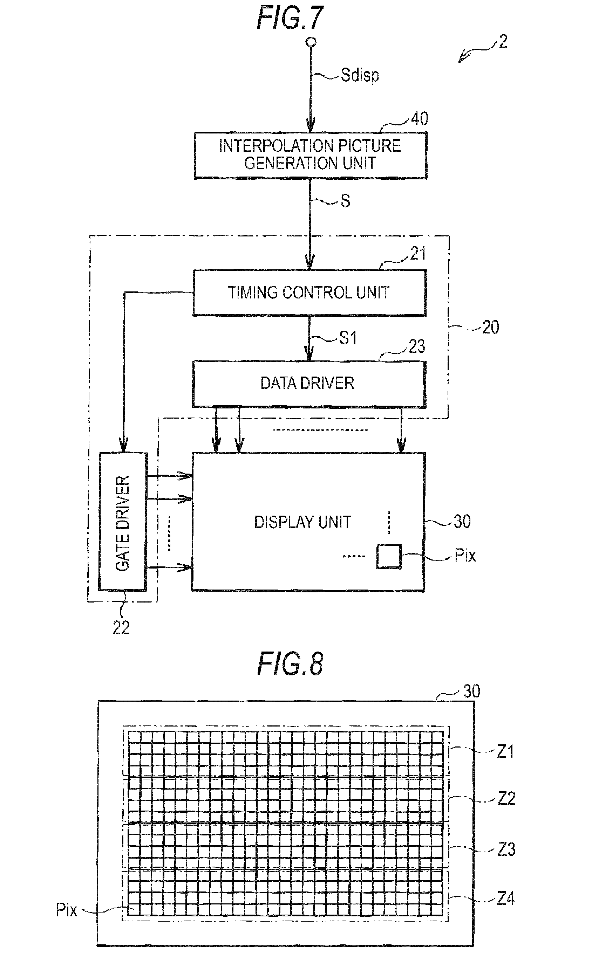

Fig. 7 shows a configuration example of the display device 2. The display device 2 includes an interpolation picture generation unit 40. The interpolation picture generation unit 40 generates interpolation pictures in respective display areas divided in the scanning direction of the display screen of the display unit 30.

Fig. 8 shows the divided display areas in the display unit 30. The display screen of the display unit 30 is divided into four sections Z1 to Z4 in the scanning direction in this example.

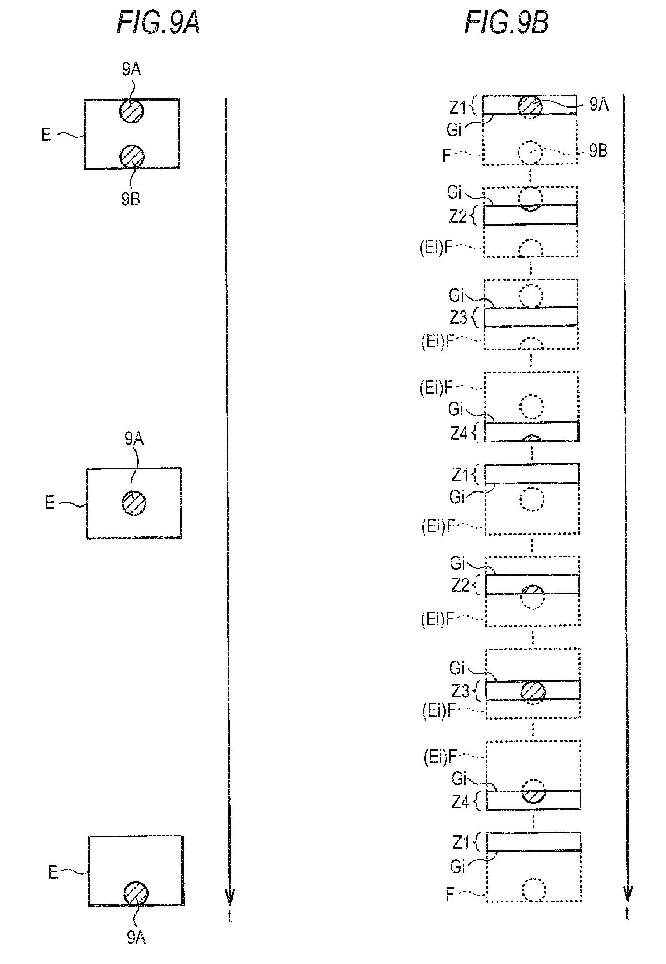

Figs. 9A and 9B schematically show an operation example of the interpolation picture generation unit 40. Fig. 9A shows the supplied video signal Sdisp and Fig. 9B shows the video signal S generated by the interpolation picture generation unit 40.

First, the interpolation picture generation unit 40 generates an interpolation frame picture Ei based on picture information of frame pictures E which are temporally adjacent to each other, and generates a series of frame pictures F by inserting the frame picture Ei between these frame pictures E (Fig. 9B). In this case, the interpolation picture generation unit 40 generates the interpolation frame picture Ei in accordance with timings at which the four sections Z1 to Z4 are scanned in the display unit 30 as described later. The interpolation picture generation unit 40 generates an interpolation picture Gi by extracting a picture in a section concerning the frame picture from each frame picture F (Fig. 9B).

In the above explanation, the interpolation picture generation unit 40 generates the interpolation frame picture Ei based on the frame picture E once and generates the interpolation picture Gi based on the interpolation frame picture Ei, however, it is not limited to this, and it is also preferable to generate the interpolation picture Gi directly based on the frame picture E.

Here, the interpolation picture generation unit 40 corresponds to a specific example of an "interpolation picture generation unit" in the present disclosure. The interpolation picture Gi corresponds to a specific example of an "interpolation picture" in the present disclosure.

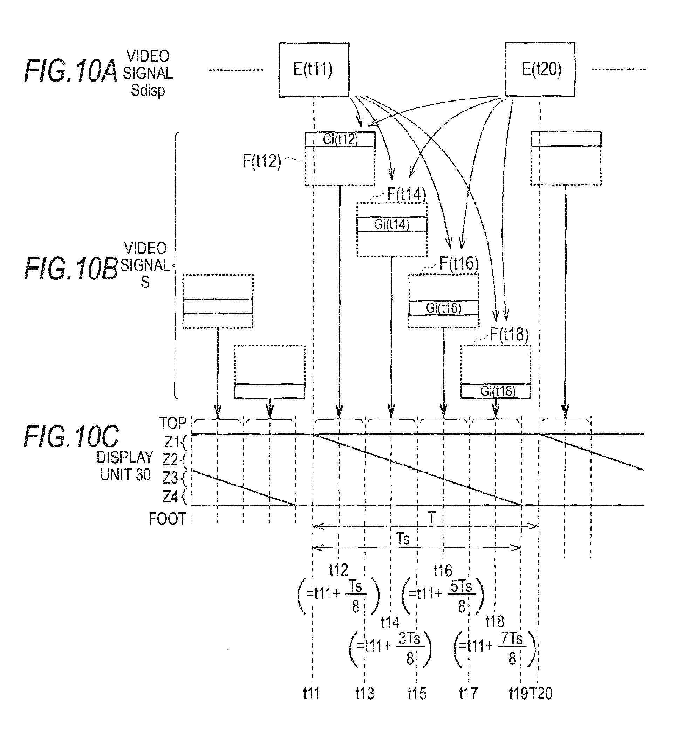

Figs . 10A to 10C show on operation example of the display device 2. Fig. 10A shows the video signal Sdisp, Fig. 10B shows the video signal S and Fig. 10C shows line sequential scanning in the display unit 30.

The display device 2 performs display in the section Z1 of the display unit 30 during a period from a timing "t11" to a timing "t13". Specifically, first, the interpolation picture generation unit 40 generates a frame picture F (t12) concerning a timing "t12" by performing interpolation processing based on frame pictures E (t11) , E (t20) included in the video signal Sdisp as shown in Figs. 10A and 10B. The timing "t12" corresponds to the central timing of the period (the timing "t11" to the timing "t13") during which display is performed on the section Z1 of the display unit 30. Then, the interpolation picture generation unit 40 generates an interpolation picture Gi (t12) by extracting a portion corresponding to the section Z1. Then, the display unit 30 displays the interpolation picture Gi (t12) in the section Z1 as shown in Fig. 10C.

In the same manner, the display device 2 performs display in the section Z2 of the display unit 30 during a period from the timing "t13" to a timing "t15", performs display in the section Z3 of the display unit 30 during a period from the timing "t15" to a timing "t17" and performs display in the section Z4 of the display unit 30 during a period from the timing "t15" to a timing "t19".

As described above, the interpolation pictures are generated in respective display areas divided in the scanning direction of the display screen in the embodiment, therefore, the interpolation processing can be simplified. The other advantages are the same as the first embodiment.

### [Modification example]

In the above embodiment, the interpolation picture generation unit 40 generates the interpolation frame picture corresponding to the central timing of the period during which display of each section of the display unit is performed, however, it is not limited to this. An operation example in the case of using an interpolation picture generation unit 40B which generates an interpolation frame picture corresponding to the first timing in the period during which display of each section is performed will be explained below as an example.

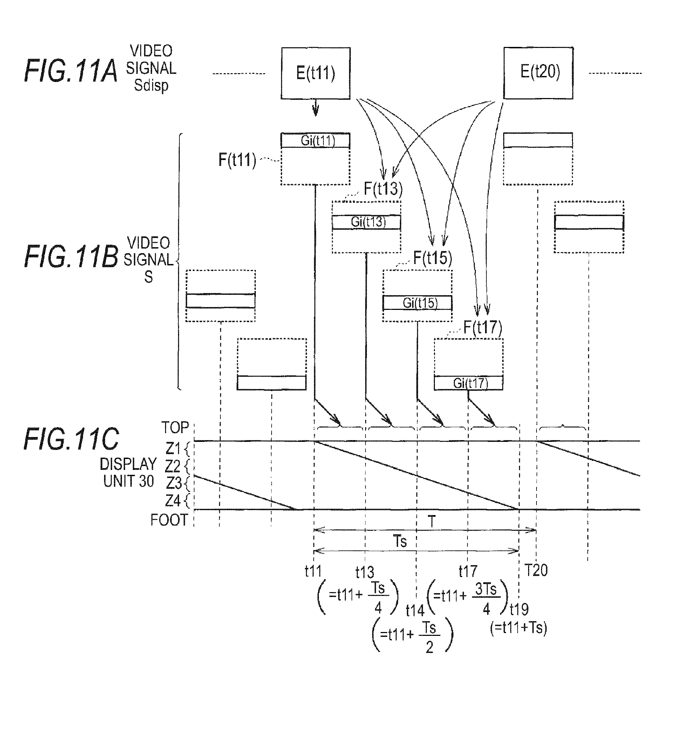

Figs. 11A to 11C show on operation example of a display device according to the modification example. Fig. 11A shows the video signal Sdisp, Fig. 11B shows the video signal S and Fig. 11C shows line sequential scanning in the display unit 30.

In the modification example, the interpolation picture generation unit 40B generates the interpolation frame picture in accordance with the first timing of the period during which display of each section in the display unit is performed. Specifically, for example, when performing display in the section Z2 of the display unit 30 in the period from the timing "t13" to the timing "t15", the interpolation picture generation unit 40B generates a frame picture F (t13) which is the first timing of the period based on frame pictures E (t11) , E (t20) . Then, the display unit 30 displays an interpolation picture Gi (t13) in the section Z2 as shown in Fig. 11C.

The display screen is divided into four in the scanning direction in the above embodiment, however, it is not limited to this. Instead, it is also preferable that the display screen is divided into two or three, moreover, five or more. In such case, it is desirable, for example, that the interpolation picture generation unit performs interpolation processing for respective divided sections and generates interpolation frame pictures respectively.

The present disclosure has been explained by citing some embodiments and the modification example, however, the present disclosure is not limited to these embodiments and so on, and various alternations may occur.

For example, liquid crystal is used for the display unit 30 in the embodiment and so on, however, it is not limited to this, and EL can be used instead.

The present disclosure contains subj ect matter related to that disclosed in Japanese Priority Patent Application JP 2010-250697 filed in the Japan Patent Office on November 9, 2010, the entire content of which is hereby incorporated by reference.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

It should be understood by those skilled in the art that various modifications, combinations, sub-combinations and alterations may occur depending on design requirements and other factors insofar as they are within the scope of the appended claims or the equivalents thereof.

## Claims

1. A display device comprising:
a display unit including plural display sections divided in a first direction and performing line sequential scanning in the first direction; and
an interpolation picture generation unit generating an interpolation picture in accordance with a timing at which each display section is scanned based on supplied frame pictures,
wherein the display unit displays the interpolation picture corresponding to the display section in each display section.

2. The display device according to claim 1,
wherein the display unit is configured by arranging display lines in the first direction in parallel each having a row of plural display elements provided in a direction intersecting with the first direction, and
the display sections are the display lines.

3. The display device according to claim 1,
wherein the display unit is configured by arranging display lines in the first direction in parallel each having a row of plural display elements provided in a direction intersecting with the first direction, and
the display section includes plural display lines.

4. The display device according to claim 3,
wherein the interpolation picture generation unit generates each interpolation picture respectively in accordance with a timing at which a display element positioned at the center of each display section in the first direction is scanned.

5. A display device comprising:
a display unit performing line sequential scanning; and
an interpolation picture generation unit generating an interpolation picture based on respective pictures in a first frame and a second frame which are temporally adjacent to each other,
wherein the display unit displays the interpolation picture during the line sequential scanning of the first frame.

6. A display method comprising:
generating an interpolation picture based on supplied frame pictures in accordance with a timing at which each display section in plural display sections is scanned, which are divided in a scanning direction of a display screen to be displayed by line sequential scanning, and
displaying the interpolation picture corresponding to the display section in each display section.
